Europäisches Patentamt

**(19)** European Patent Office

Office européen des brevets

**(11)** Publication number : **0 353 374 B1**

**(12)** # EUROPEAN PATENT SPECIFICATION

**(45)** Date of publication of patent specification :
**18.03.92 Bulletin 92/12**

**(51)** Int. Cl.⁵ : **F02C 6/18,** F02C 9/22,
F02C 9/18, F02C 3/30

**(21)** Application number : **88850254.9**

**(22)** Date of filing : **25.07.88**

**(54)** Gas turbine unit for combined production of electricity and heat and method for operating such unit.

**(43)** Date of publication of application :
**07.02.90 Bulletin 90/06**

**(45)** Publication of the grant of the patent :
**18.03.92 Bulletin 92/12**

**(84)** Designated Contracting States :
**CH DE ES FR GB IT LI SE**

**(56)** References cited :
**EP-A- 0 150 990**
**EP-A- 0 247 984**
**FR-A- 2 124 253**
**GB-A- 836 135**
**GB-A- 2 094 404**
**GB-A- 2 133 839**

**(73)** Proprietor : **ABB STAL AB**
**S-612 20 Finspång (SE)**

**(72)** Inventor : **Harboe,Henrik**
**Hammerensgade 3**
**Copenhagen (DK)**
Inventor : **Kyrklund, Ben**
**Källvägen 9**
**S-61200 Finspang (SE)**

**(74)** Representative : **Ström, Tore**
**Ström & Gulliksson AB Studentgatan 1 P.O.**
**Box 4188**
**S-203 13 Malmö (SE)**

## Description

The invention relates to a method of operating a gas turbine unit for combined production of electricity and heat.

A gas turbine unit for combined production of electricity and heat such as hot water for remote heating networks is required to fulfill the following demands:
- high electrical efficiency
- high total thermal efficiency
- high relationship electricity to heat
- flexibility between electricity and heat production
- insensitive to variations of the surrounding temperature.

These demands are fulfilled very well by a two-shaft gas turbine unit of the type comprising a combustion chamber, a high pressure turbine driven by gas from the combustion chamber, a low pressure turbine driven by the exhaust gas from the high pressure turbine, a low pressure compressor driven by the low pressure turbine, a high pressure compressor connected in series with the low pressure compressor and driven by the high pressure turbine for the supply of pressurized air to the combustion chamber, a generator driven by the high pressure turbine for producing electricity, a recuperator for heat exchange between exhaust gas and pressurized air from the compressors, an intermediate cooler for producing hot water between the low pressure and high pressure compressors, and an exhaust gas heat exchanger for producing hot water.

Electricity is produced by the generator connected to the shaft of the high pressure turbine, hot water at a temperature ranging from 70 to 120°C being produced in the intermediate cooler and the exhaust gas heat exchanger. The shaft of the high pressure turbine thus rotates at a constant speed, the shaft of the low pressure turbine being allowed to rotate freely.

Considering the thermodynamic process in the gas turbine unit referred to such a unit shortly can be defined as a "recuperative exhaust gas turbine having an intermediate cooler" and has an electrical efficiency which is 30 to 40 % better than that of a simple gas turbine operating at a corresponding turbine inlet temperature. Since the heat recovered in the intermediate cooler, and the heat of the exhaust gas is utilized for the hot water production a high total efficiency will be obtained. A gas turbine unit of the described type is disclosed in EP-A-0247984.

The invention relates to a method of operating a gas turbine unite of the type referred to above, and in order to satisfy the remaining demands listed above the invention provides a method comprising the steps of adjusting the electric power to the desired value by changing the geometry of the low pressure turbine in order to change the rotational speed thereof at constant temperature in the combustion chamber, and adjusting the heat power to the desired value by controlling a flow bypassing the recuperator.

The invention also provides a gas turbine unit of the type referred to which can be used in working the method of the invention, wherein the low pressure turbine has an adjustable geometry and wherein an adjustable connection is provided bypassing the recuperator.

In order to explain the invention in more detail reference is made to the accompanying drawings in which

FIG. 1 is a diagram of a gas turbine unit for working the method of the invention,

FIG. 2 is a graph disclosing the operative range of the gas turbine unit, and

FIG. 3 is a diagram of the gas turbine unit having supplementary apparatus for water injection.

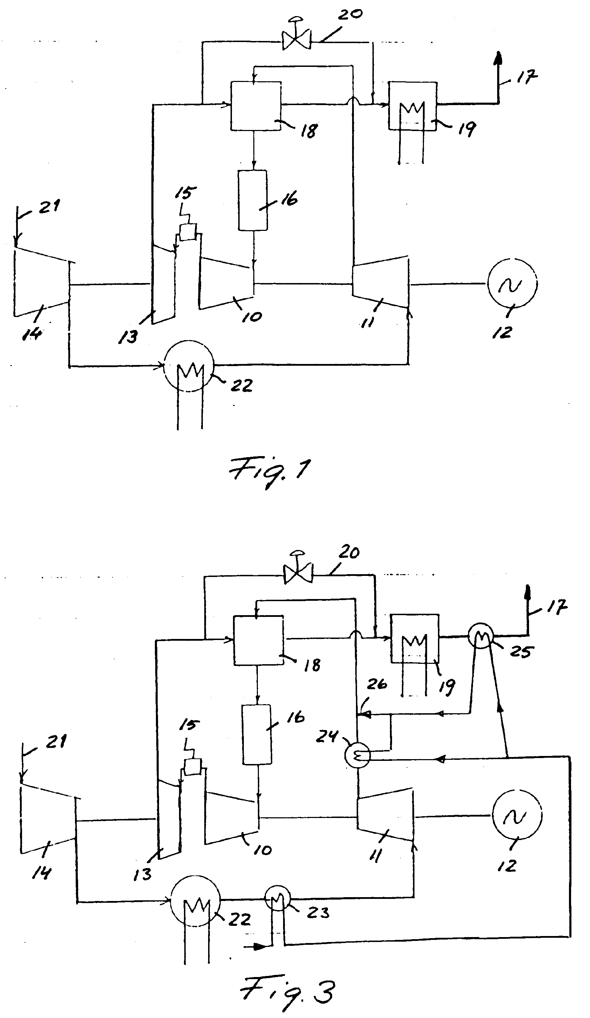

Referring to FIG. 1 the turbine unit disclosed therein comprises a high pressure gas turbine 10 which is connected to a high pressure compressor 11 and, via a gearing, to an electric generator 12 for recovering electric useful output from the unit, and a low pressure gas turbine 13 which is connected to a low pressure compressor 14. Between the high pressure turbine and the low pressure turbine a regulator 15 is provided for adjustable low pressure turbine geometry.

A combustion chamber 16 (boiler) is connected at the gas outlet thereof to the high pressure turbine to supply gas to said turbine as well as the low pressure turbine connected in series with the high pressure turbine. The low pressure turbine is connected to a chimney as indicated by an arrow 17 in series with a recuperator 18 and an exhaust gas heat exchanger 19. The combustion chamber is connected at the air inlet thereof to the high pressure compressor to supply combustion air via the recuperator. An adjustable connection 20 bypassing the recuperator 18 is provided to pass part of the exhaust gas flow past the recuperator.

The high pressure compressor is connected in series with the low pressure compressor which takes air from the surroundings as indicated by an arrow 21. An intermediate cooler (intercooler) 22 is provided in the connection between the low pressure compressor and the high pressure compressor for heat exchange between the air in the compressor circuit and an external circuit for producing hot water, and the exhaust gas heat exchanger is provided for the same purpose.

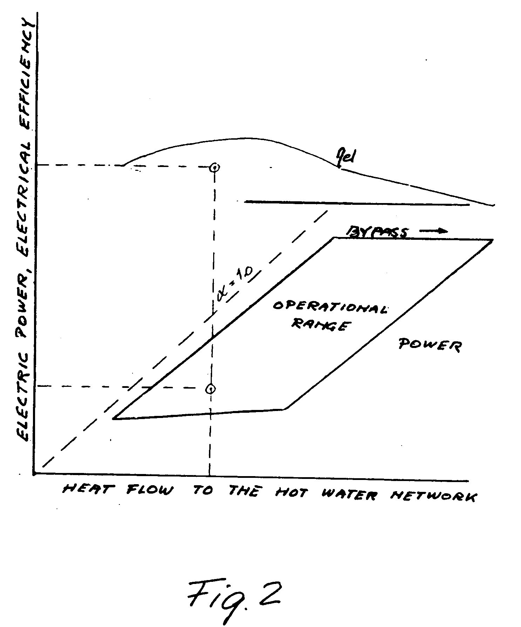

In the method of the invention the air flow is controlled primarily, the temperature level being maintained constant, by the rotational speed of the low pressure compressor being adjusted by means of the regulator 15 in order to change the geometry of the low pressure turbine. Not until this control possibility has been fully utilized control of the temperature in the combustion chamber will be initiated. When this control method is applied the efficiency will be as good as or even better than that in the full load position within nearly the total partial load range (10 to 100% load). Due to the fact that part of the exhaust gas flow is passed through the adjustable connection 20 bypassing the recuperator the heat flow to the exhaust gas heat exchanger 19 will be increased. Then, the electricity production will be reduced at constant supply of fuel due to the reduced preheating of the combustion air. The gas turbine unit as a consequence thereof can operate within a large range of varying electricity to heat relationships as is illustrated in FIG. 2. The electric efficiency will decrease at increasing bypass relationship while the total efficiency will increase.

A conventional gas turbine is sensitive to the surrounding temperature. The output and the electrical efficiency will decrease at increasing surrounding temperature due to decreasing inlet air mass flow. In the gas turbine unit described herein the rotational speed of the low pressure turbine can be adjusted by means of the regulator 15 in order to change the geometry of the low pressure turbine such that the mass flow of the air will be maintained at a constant value at varying surrounding temperature.

The amount of nitrogen oxides ($NO_x$) of the exhaust gas can be reduced to low levels by water injection into the combustion chamber in the manner applied in conventional gas turbines. Then there is usually obtained an increased electric power and a decreased electrical and total efficiency. However, in the gas turbine unit described herein the electric power and the electrical efficiency can be increased by water injection by using the supplementary apparatus shown in FIG. 3. Water for the water injection is preheated by means of the compressor air in heat exchangers 23 and 24 and/or by means of the exhaust gas in a heat exchanger 25 as is shown in FIG. 3 then to be injected into the compressor air upstream the recuperator 18 at 26. Then, the heat absorption in the recuperator will be increased providing an improved electrical efficiency. However, the total efficiency will decrease due to increased chimney loss.

## Claims

1. Method in operating a gas turbine unit for combined production of electricity and heat comprising a combustion chamber (16), a high pressure turbine (10) driven by gas from the combustion chamber, a low pressure turbine (13) driven by the exhaust gas from the high pressure turbine, a low pressure compressor (14) driven by the low pressure turbine, a high pressure compressor (11) connected in series with the low pressure compressor and driven by the high pressure turbine for the supply of pressurized air to the combustion chamber, a generator (12) driven by the high pressure turbine for producing electricity, a recuperator (18) for heat exchange between exhaust gas and pressurized air from the compressors, an intermediate cooler (22) for producing hot water between the low pressure and the high pressure compressors, and an exhaust gas heat exchanger (19) for producing hot water, characterized in that the electric power is adjusted to the desired value by changing the geometry of the low pressure turbine in order to change the rotational speed thereof at constant temperature in the combustion chamber, and that the heat power is adjusted to the desired value by controlling a flow bypassing the recuperator.

2. Method as in claim 1 wherein water is injected into the compressor air upstream the recuperator.

3. Method as in claim 2 wherein the injection water is preheated.

4. Gas turbine unit for working the method of any of claims 1 to 3, comprising a combustion chamber (16), a high pressure turbine (10) driven by gas from the combustion chamber, a low pressure turbine (13) driven by the exhaust gas from the high pressure turbine, a low pressure compressor (14) driven by the low pressure turbine, a high pressure compressor (11) connected in series with the low pressure compressor and driven by the high pressure turbine for the supply of pressurized air to the combustion chamber, a generator (12) driven by the high pressure turbine for producing electricity, a recuperator (18) for heat exchange between exhaust gas and pressurized air from the compressors, an intermediate cooler (22) for producing hot water between the low pressure and the high pressure compressors and an exhaust gas heat exchanger (19) for producing hot water, characterized in that the low pressure turbine (13) has an adjustable geometry and that an adjustable connection (20) is provided bypassing the recuperator (18).

## Patentansprüche

1. Verfahren zum Betreiben einer Gasturbinenanlage für kombinierte Erzeugung von Elektro- und Wärme-energie, mit einer Brennkammer (16), einer durch Gas von der Brennkammer angetriebenen Hochdruckturbine (10), einer durch das Abgas von der Hochdruckturbine angetriebenen Niederdruckturbine (13), einem durch die Niederdruckturbine angetriebenen Niederdruckverdichter (14), einem mit dem Niederdruckverdichter in Reihe geschalteten und durch die Hochdruckturbine angetriebenen Hochdruckverdichter (11) für die Zuspeisung von Druckluft zur Brennkammer, einem durch die Hochdruckturbine angetriebenen Generator (12) zur Erzeugung von Elektrizität bzw. Elektroenergie, einem Rekuperator oder Vorwärmer (18) für Wärmeaustausch zwischen Abgas und Druckluft von den Verdichtern, einem Zwischenkühler (22) zum Erzeugen von Heißwasser zwischen den Niederdruck- und Hochdruckverdichtern und einem Abgaswärmetauscher (19) zum Erzeugen von Heißwasser, dadurch gekennzeichnet, daß die Elektroenergie(abgabe) durch Änderung der Geometrie der Niederdruckturbine zwecks Änderung ihrer Drehzahl bei konstanter Temperatur in der Brennkammer auf den gewünschten Wert eingestellt wird und daß die Wärme-energie(abgabe) durch Steuerung einer den Rekuperator oder Vorwärmer umgehenden Strömung auf den gewünschten Wert eingestellt wird.

2. Verfahren nach Anspruch 1, bei dem stromauf des Rekuperators oder Vorwärmers Wasser in die Verdichterluft eingespritzt wird.

3. Verfahren nach Anspruch 2, bei dem das Einspritzwasser vorgewärmt wird.

4. Gasturbinenanlage zur Durchführung des Verfahrens nach einem der Ansprüche 1 bis 3, mit einer Brennkammer (16), einer durch Gas von der Brennkammer angetriebenen Hochdruckturbine (10), einer durch das Abgas von der Hochdruckturbine angetriebenen Niederdruckturbine (13), einem durch die Niederdruckturbine angetriebenen Niederdruckverdichter (14), einem mit dem Niederdruckverdichter in Reihe geschalteten und durch die Hochdruckturbine angetriebenen Hochdruckverdichter (11) für die Zuspeisung von Druckluft zur Brennkammer, einem durch die Hochdruckturbine angetriebenen Generator (12) zur Erzeugung von Elektrizität bzw. Elektroenergie, einem Rekuperator oder Vorwärmer (18) für Wärmeaustausch zwischen Abgas und Druckluft von den Verdichtern, einem Zwischenkühler (22) zum Erzeugen von Heißwasser zwischen den Niederdruck- und Hochdruckverdichtern und einem Abgaswärmetauscher (19) zum Erzeugen von Heißwasser, dadurch gekennzeichnet, daß die Niederdruckturbine (13) eine verstellbare Geometrie aufweist und daß eine den Rekuperator oder Vorwärmer (18) überbrückende, einstellbare Verbindung (20) vorgesehen ist.

## Revendications

1. Procédé de fonctionnement d'un groupe de turbines à gaz, pour la production combinée d'électricité et de chaleur, comprenant une chambre de combustion (16), une turbine à haute pression (10) entraînée par le gaz provenant de la chambre de combustion, une turbine à basse pression (13), entraînée par les gaz d'échappement provenant de la turbine à haute pression, un compresseur à basse pression (14) entraîné par la turbine à basse pression, un compresseur à haute pression (11), relié en série au compresseur à basse pression et entraîné par la turbine à haute pression pour assurer l'amenée d'air comprimé à la chambre de combustion, un générateur électrique (12), entraîné par la turbine à haute pression pour produire de l'électricité, un récupérateur (18) pour assurer un échange de chaleur entre les gaz d'échappement et l'air comprimé provenant des compresseurs, un réfrigérant intermédiaire (22) pour produire de l'eau chaude entre les compresseurs à basse pression et à haute pression, et un échangeur de chaleur de gaz d'échappement (19), pour produire de l'eau chaude, caractérisé en ce que la puissance électrique est ajustée à la valeur recherchée par variation de la géométrie de la turbine à basse pression, de manière à en faire varier la vitesse de rotation à température constante dans la chambre de combustion, et en ce que la puissance calorifique est ajustée à la valeur recherchée par commande d'une dérivation de l'écoulement du récupérateur.

2. Procédé selon la revendication 1, dans lequel de l'eau est injectée dans le compresseur d'air, en amont du récupérateur.

3. Procédé selon la revendication 1, dans lequel l'eau d'injection est préchauffée.

4. Groupe de turbines à gaz, pour mettre en oeuvre le procédé selon l'une quelconque des revendications 1 à 3, comprenant une chambre de combustion (16), une turbine à haute pression (10) entraînée par le gaz provenant de la chambre de combustion, une turbine à basse pression (13), entraînée par les gaz d'échappement provenant de la turbine à haute pression, un compresseur à basse pression (14) entraîné par la turbine à basse pression, un compresseur à haute pression (11), relié en série au compresseur à basse pression et entraîné par la turbine à haute pression pour assurer l'amenée d'air comprimé à la chambre de combustion, un générateur électrique (12), entraîné par la turbine à haute pression pour produire de l'électricité, un récupérateur (18) pour assurer un échange de chaleur entre les gaz d'échappement et l'air comprimé provenant des compresseurs, un réfrigérant intermédiaire (22) pour produire de l'eau chaude entre les compresseurs à basse pression et à haute pression, et un échangeur de chaleur de gaz d'échappement (19), pour produire de l'eau chaude, caractérisé en ce que la turbine à basse pression (13) présente une géométrie ajustable et qu'une liaison ajustable (20) est prévue pour assurer une dérivation de l'écoulement du récupérateur (18).

20

18

17

19

21

15

16

13 10 11 12

14

22

Fig. 1

20

18

17

19

26 25

24

21

15

16

13 10 11 12

14

22 23

Fig. 3

5

Fig. 2